# EUROPEAN PATENT APPLICATION

(11) **EP 2 530 613 A2**
(43) Date of publication of application: **05.12.2012**
(21) Application number: 12170585.9
(22) Date of filing: 01.06.2012
(51) Int. Cl.: G06F 17/30

(54) **Method of distributing files, file distribution system, master server, computer readable, non-transitory medium storing program for distributing files, method of distributing data, and data distribution system**

(30) Priority: 03.06.2011 JP 2011125588
(71) Applicant: FUJITSU LIMITED, Kawasaki-shi, Kanagawa 211-8588 (JP)
(72) Inventor: Yoshida, Taketoshi, Kawasaki-shi Kanagawa 211-8588 (JP)
(74) Representative: Holz, Ulrike

(57) **Abstract**

A method of distributing distribution files from a master server possessing the distribution files to servers is disclosed. The method includes generating a distribution scheme having a hierarchical structure, the tree structure including nodes and having the master server in a top node, wherein a distribution file group including the distribution files is to be allocated to each node, and a subordinate node is to include a subset of a distribution file group allocated to a superior node, which is located a level superior to the subordinate node; allocating the servers to each node, based on system status information indicating a status of the master server and/or the servers; distributing at least one distribution file to each server, based on the distribution scheme; and exchanging directly among servers corresponding to each nodes, not possessed by the servers corresponding to the respective nodes.

## Description

### FIELD

The present disclosure relates to a method of distributing files, a file distribution system, a master server, a program for distributing files, a method of distributing data, and a data distribution system.

### BACKGROUND

Systems having a function to distribute files (data) to multiple servers have been widely employed, in order to share the files (data) among these servers.

For example, systems have been used, wherein one master server distributes files for sharing them among servers within the system, and maintains management information related to the distribution in a centralized manner. One example of such systems is BitTorrent.

Upon distributing files in such a system, a tree of distribution routes having the master server on its top is defined in advance, and the respective servers receive files (data) and send them to their subordinate node(s).

In a treelike distribution scheme, however, files are sent one-directionally, which leads to an increased time until completion of distribution of ever pieces of data to communication apparatuses at the bottom of the tree, considering the time required to transmit the files (data) from the top to the bottom, like dominos.

In addition, the distribution cannot be modified according to the statuses of the system, since the tree structure is defined in advance.

Further, upon a failure of the communication apparatus on the top of the tree or a communication apparatus on somewhere middle on a path, files distribution to subordinate communication apparatuses is disrupted.

### SUMMARY

Embodiments of the present disclosure are directed to reducing the time required for file (data) distribution.

Embodiments of the present disclosure are also directed to enabling modification of routes for the file (data) distribution according to the system status.

Embodiments of the present disclosure are also directed to ensuring redundancy to distribution routes during the file (data) distribution.

According to an embodiment of an aspect of the invention, there is provided a method of distributing a plurality of distribution files from a master server possessing the plurality of distribution files to a plurality of servers, the method including: generating a distribution scheme having a tree structure, the tree structure including a plurality of nodes in a plurality of levels and having the master server in a top node, wherein a distribution file group including at least one of the plurality of distribution files is to be allocated to each node, and a subordinate node is to include a subset of a distribution file group allocated to a superior node, which is located a level superior to the subordinate node; allocating at least one of the servers to each node in the distribution scheme, based on system status information indicating a status of at least one of the master server or the plurality of servers; distributing at least one distribution file to each server, to be allocated to a node corresponding to the server, based on the distribution scheme; and exchanging distribution files not possessed by servers corresponding to each node directly among the servers corresponding to the each nodes, based on distribution file management information, the distribution file management information including, for each node in the distribution scheme, superior node information indicating at least one node superior to the node, distribution file information indicating a distribution file to be distributed, possessed distribution file information indicating distribution files possessed by the node, subordinate node information indicating at least one node subordinate to the node, and subordinate possessing distribution file information indicating a distribution file to be possessed by the at least one subordinate node.

According to an embodiment of an aspect of the invention, there is provided a file distribution system including a master server possessing a plurality of distribution files and a plurality of servers to which the distribution files are to be distributed, the file distribution system including: a distribution scheme generator that generates a distribution scheme having a tree structure, the tree structure including a plurality of nodes in a plurality of levels and having the master server in a top node, wherein a distribution file group including at least one of the plurality of distribution files is to be allocated to each node, and a subordinate node is to include a subset of a distribution file group allocated to a superior node, which is located a level superior to the subordinate node; a system status database including a status of the system as system status information; an allocator that allocates at least one of the servers to each node in the distribution scheme, based on the system status information; a distribution file management database that contains distribution file management information, the distribution file management information including, for each node in the distribution scheme, superior node information indicating at least one node superior to the node, distribution file information indicating a distribution file to be distributed, possessed distribution file information indicating distribution files possessed by the node, subordinate node information indicating at least one node subordinate to the node, and subordinate possessing distribution file information indicating a distribution file to be possessed by the at least one subordinate node; and a distributing unit that distributes at least one distribution file to each server, to be allocated to a node corresponding to the server, based on the distribution scheme, wherein distribution files not possessed by servers corresponding to each node is exchanged directly among the servers corresponding to the each nodes.

According to an embodiment of an aspect of the invention, there is provided a master server that possesses a plurality of distribution files to be distributed to a plurality of servers, the master server including: a distribution scheme generator that generates a distribution scheme having a tree structure, the tree structure including a plurality of nodes in a plurality of levels and having the master server in a top node, wherein a distribution file group including at least one of the plurality of distribution files is to be allocated to each node, and a subordinate node is to include a subset of a distribution file group allocated to a superior node, which is located a level superior to the subordinate node; a system status database including a status of the system as system status information; an allocator that allocates at least one of the servers to each node in the distribution scheme, based on the system status information; a distribution file management database that contains distribution file management information, the distribution file management information including, for each node in the distribution scheme, superior node information indicating at least one node superior to the node, distribution file information indicating a distribution file to be distributed, possessed distribution file information indicating distribution files possessed by the node, subordinate node information indicating at least one node subordinate to the node, and subordinate possessing distribution file information indicating a distribution file to be possessed by the at least one subordinate node; and a distributing unit that distributes at least one distribution file to each server, to be allocated to a node corresponding to the server, based on the distribution scheme.

According to an embodiment of an aspect of the invention, there is provided a computer readable, non-transitory medium storing a program for distributing a plurality of distribution files from a master server possessing the plurality of distribution files to a plurality of servers, when executed by the master server, the program making the master server: generate a distribution scheme having a tree structure, the tree structure including a plurality of nodes in a plurality of levels and having the master server in a top node, wherein a distribution file group including at least one of the plurality of distribution files is to be allocated to each node, and a subordinate node is to include a subset of a distribution file group allocated to a superior node, which is located a level superior to the subordinate node; allocate at least one of the servers to each node in the distribution scheme, based on system status information indicating a status of at least one of the master server or the plurality of servers; distribute at least one distribution file to each server, to be allocated to a node corresponding to the server, based on the distribution scheme; and when executed by the plurality of servers, the program making each server: exchange distribution files not possessed by servers corresponding to each node directly among the servers corresponding to the each nodes, based on distribution file management information, the distribution file management information including, for each node, superior node information indicating at least one node superior to the node, distribution file information indicating a distribution file to be distributed, possessed distribution file information indicating distribution files possessed by the node, subordinate node information indicating at least one node subordinate to the node, and subordinate possessing distribution file information indicating a distribution file to be possessed by the at least one subordinate node.

According to an embodiment of an aspect of the invention, there is provided a data distribution method of sharing a plurality of pieces of data among a plurality of communication apparatuses, the method including: sending, by a plurality of communication apparatuses belonging to a same level in a tree-like distribution scheme, a part of pieces of data received from at least one subordinate communication apparatus, to at least one subordinate communication apparatus, to generate a plurality of groups of the plurality of communication apparatuses which have different combination of not-yet-obtained pieces of data; and replenishing, by each of the plurality of communication apparatuses, at least one not-yet-obtained piece of data, by receiving a first piece of data not possessed by the communication apparatus from a second communication apparatus belonging to a second group, simultaneously with sending a second piece of data not possessed by the second communication apparatus.

According to an embodiment of an aspect of the invention, there is provided a data distribution system for sharing a plurality of pieces of data among a plurality of communication apparatuses, the data distribution system including: the communication apparatuses, wherein a plurality of communication apparatuses belonging to a same level in a tree-like distribution scheme, send a part of pieces of data received from at least one subordinate communication apparatus, to at least one subordinate communication apparatus, to generate a plurality of groups of the plurality of communication apparatuses which have different combination of not-yet-obtained pieces of data; and a replenisher, in each of the plurality of communication apparatuses, that replenishes at least one not-yet-obtained piece of data, by receiving a first piece of data not possessed by the communication apparatus from a second communication apparatus belonging to a second group, simultaneously with sending a second piece of data not possessed by the second communication apparatus.

In any of the above embodiments, features of one embodiment may be applied to any of the other embodiments.

Embodiments also provide a computer program or computer program product for carrying out any of the methods described herein, and a computer readable medium having stored thereon a computer program for carrying out any of the methods described herein. A computer program embodying the invention may be stored on a computer-readable medium, or it could, for example, be in the form of a signal such as a downloadable data signal provided from an Internet website, or it could be in any other form.

### BRIEF DESCRIPTION OF THE DRAWINGS

FIG. 1 is a schematic diagram illustrating the configuration of a file distribution system as an exemplary embodiment;
FIG. 2 is a schematic diagram illustrating an exemplary network configuration of a file distribution system as an exemplary embodiment;
FIG. 3 is a diagram illustrating an example of a CPU load database in a status monitoring database as an exemplary embodiment;
FIG. 4 is a diagram illustrating an example of a network load database in the status monitoring database as an exemplary embodiment;
FIG. 5 is a diagram illustrating an example of a network physical configuration database in the status monitoring database as an exemplary embodiment;
FIG. 6 is a diagram illustrating a data structure of a distribution file database as an exemplary embodiment;
FIG. 7 is a diagram illustrating an example of data in the distribution file database as an exemplary embodiment;
FIG. 8 is a schematic diagram illustrating an exemplary generation of a distribution scheme as an exemplary embodiment;
FIG. 9 is a schematic diagram illustrating allocation of servers as an exemplary embodiment;
FIG. 10 is a schematic diagram illustrating selection of servers, taking the network physical configuration into consideration, as an exemplary embodiment;
FIG. 11 is a schematic diagram illustrating processing by a distribution scheme generator in the configuration in a file distribution system as an exemplary embodiment;
FIG. 12 is a Venn diagram representing a distribution scheme in the file distribution system as an exemplary embodiment;
FIG. 13 is a flowchart illustrating a method of distributing files as an exemplary embodiment;
FIG. 14 is a schematic diagram illustrating a distribution scheme in a file distribution system as a first modification to an embodiment;
FIG. 15 is a Venn diagram representing the distribution scheme in FIG. 14; and
FIG. 16 is a schematic diagram illustrating a distribution scheme in a file distribution
system as a second modification to an embodiment.

### DESCRIPTION OF EMBODIMENTS

### (A) System Configuration

An example of an embodiment of the present disclosure will be described with reference to the drawings.

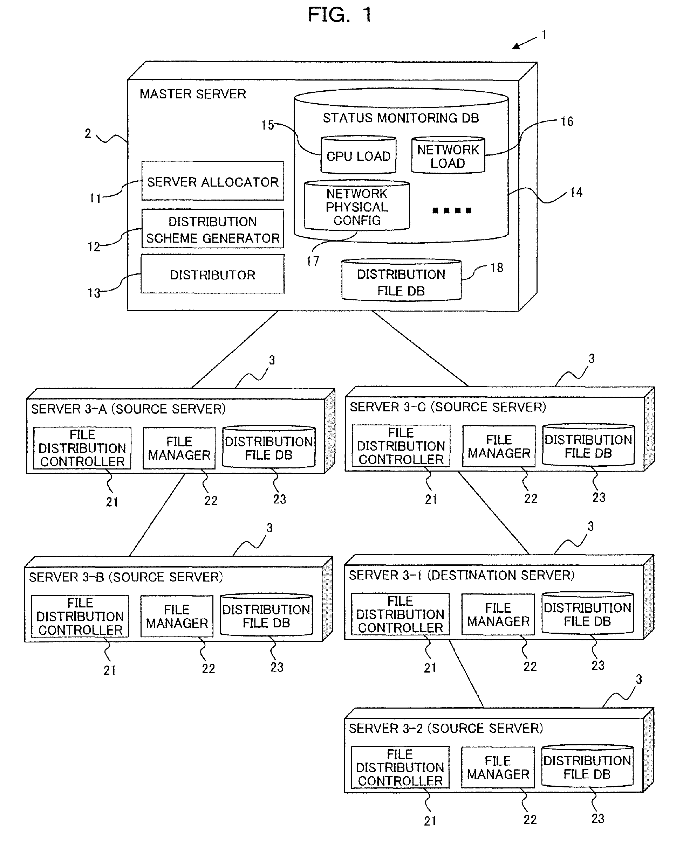

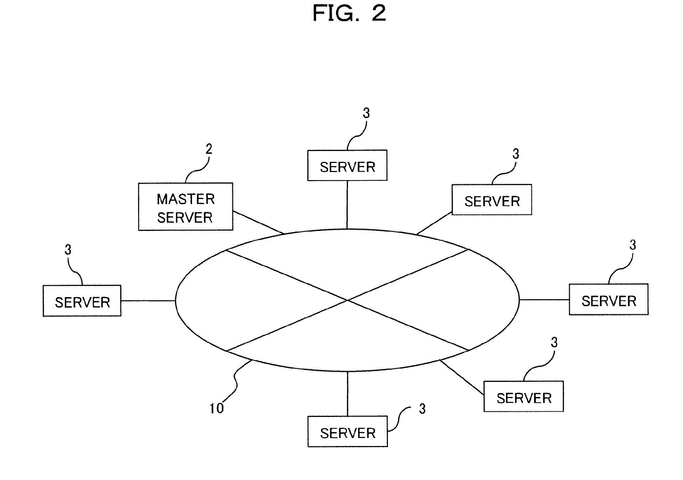

FIG. 1 is a schematic diagram illustrating the configuration of a file distribution system 1 as an exemplary embodiment, and FIG. 2 is a schematic diagram illustrating an exemplary network configuration of the file distribution system 1.

The file distribution system 1 is for distribution (share) of distribution files (data).

The file distribution system 1 includes a master server (communication apparatus) 2 and multiple servers (communication apparatuses) 3, wherein the master server 2 and the servers 3-A, 3-B, 3-C, 3-1, and 3-2 (hereinafter, collectively referred to as "servers 3") are connected to each other.

As depicted in FIG. 2, the master server 2 and the servers 3 are connected to each other through a network 10. The network 10 may be a local area network (LAN), for example.

In the file distribution system 1, revision or update files (e.g., patches for the operating system, drivers, and application programs) for files stored in the servers 3 are distributed, as distribution files, from the master server 2 to the servers 3, for example.

The master server 2 is a computer (server computer) having a server function for managing all of the distribution files and distributing them.

The master server 2 may include a central processing unit (CPU), memory units (ROM or RAM), a hard disk drive, which are not illustrated.

Hereinafter, the configuration of the master server 2 as an exemplary embodiment will be described.

The master server 2 may include, as depicted in FIG. 1, a server allocator 11, a distribution scheme generator 12, a distributing unit 13, a status monitoring database (DB) 14, and a distribution file database (DB) 18.

A hard disk drive in each server 3 stores, files to be distributed, as well as a status monitoring database (DB) 14 and a distribution file database (DB) 18.

The server allocator 11 may select servers 3, to be used as source servers (hereinafter, such servers are sometimes referred to as "source-candidate servers"). The server allocator 11 may select source-candidate servers 3, based on various conditions, such as the CPU loads, the network loads on links between servers 3, and the network physical configuration of the server 3. These conditions are stored in the status monitoring database 14, as will be described later.

For example, for selecting source-candidate servers 3 primarily based on the CPU loads, the server allocator 11 sorts the entries for all the servers 3 in a CPU load database 15 (described later), in the ascending order of the CPU loads (the server 3 with the lowest CPU load comes first), and selects top servers 3 in a predetermined number or predetermined percentage.

Alternatively, for selecting source-candidate servers 3 primarily based on the network loads on links between servers 3, the server allocator 11 sorts the entries for all the servers 3 in a network load database 16 (described later), in the ascending order of the network loads (the server 3 with the lowest network load comes first), and selects top servers 3 in a predetermined number or predetermined percentage.

Further, source-candidate servers 3 may be selected based on both the CPU loads and the network loads. In this case, the server allocator 11 may calculate weighed values of the CPU loads from the CPU load database 15 and the network loads from the network load database 16 using some sort of weights, and select servers 3 with highest weighed values in a predetermined number or predetermined percentage.

The selected servers 3 are assigned to nodes in a distribution scheme generated by the distribution scheme generator 12, as will be described later.

The distribution scheme generator 12 may generate a distribution scheme that defines routes for file distribution.

Upon generating the distribution scheme, the distribution scheme generator 12 may group distribution files, according to their types (e.g., sizes and purposes). Here, the count of the files to be distributed in the file distribution system 1 is represented by "n" (n is an integer of 2 or greater).

Upon grouping, if the number of distribution file types is small but the file sizes are large, the distribution scheme generator 12 may divide one distribution file into several files. In this manner, the distribution scheme generator 12 prepares n distribution files by grouping and/or dividing the files to be distributed in the file distribution system 1 appropriately. By dividing and/or grouping files, simultaneous transmission and reception of such multiple groups (files) are made possible during a file exchange (described later). Hence, uniformalizing the data sizes of these multiple groups (files) helps to reduce the time loss and to improve the efficiency of the file exchange.

As used hereinafter, files generated by dividing a single file and grouping multiple files are collectively referred to as "distribution files". The distribution scheme generator 12 then defines nodes (groups), which are subsets of these files, and notifies the server allocator 11 of the nodes.

Further, the distribution scheme generator 12 generates a distribution scheme for file distribution, based on the groups. Here, the distribution scheme generator 12 generates the distribution scheme for file distribution in the manner as follows.

As an example, the distribution scheme generator 12 may generate a hierarchical distribution scheme. In the scheme, all distribution files are included in the top node, and the counts of distribution files in nodes are reduced as descending the structure toward the bottom. An example of such hierarchical structures is a tree structure. A tree structure will be described in detail later.

The distributing unit 13 makes a control to distribute the distribution files all servers 3. As an example, the distributing unit 13 may push the distribution files to the source-candidate server 3 selected by the server allocator 11, thereby making them function as source servers. The distributing unit 13 may also issue an instruction to initiate file distribution among the servers 3 peer-to-peer (P2P). The distributing unit 13 may be embodied by means of hardware and/or software.

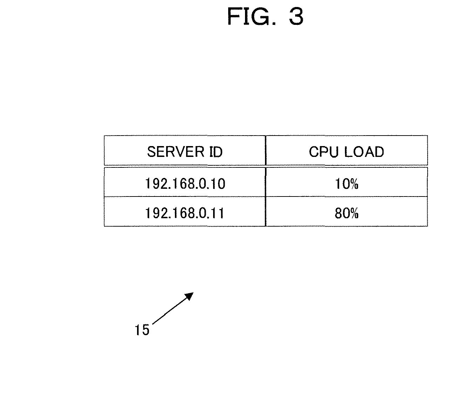

The status monitoring database 14 is a database of the statuses of the servers 3 (e.g., the CPU loads), and system statuses, such as the network physical configuration of the servers 3 and the network traffic information of links between servers 3. In the present embodiment, the status monitoring database 14 may include a CPU load database 15, a network load database 16, and a network physical configuration database 17. FIGS. 3-5 depict examples of the CPU load database 15, the network load database 16, and the network physical configuration database 17 in the status monitoring database 14, respectively.

The CPU load database 15 is a database of the respective CPU loads of the servers 3. In the example depicted in FIG. 3, the CPU load database 15 includes server identifiers (IP addresses, in this example) of the servers 3 in the file distribution system 1, and the corresponding CPU loads (in percentages).

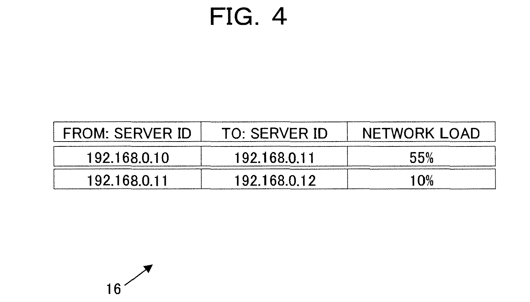

The network load database 16 is a database of the respective loads of the links between servers 3. In the example depicted in FIG. 4, the network load database 16 includes "From: Server ID" which lists server identifiers (IP addresses, in this example) of the servers 3 at the starting points of the links in the file distribution system 1, "To: Server ID" which lists server identifiers (IP addresses, in this example) of the servers 3 at the end points of the links, and the corresponding network loads (in percentages) of the links. As used herein, the "starting point" of a link refers to a node closer to a switch, whereas the "end point" refers to a node farther from the switch, for the convenience of the illustration.

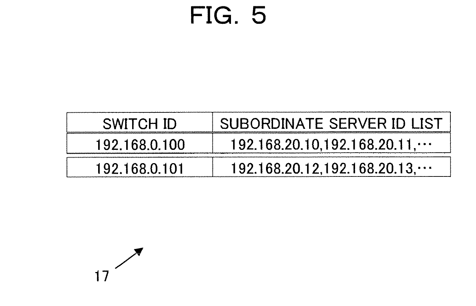

The network physical configuration database 17 is a database of the configuration of the network in the file distribution system 1. In the example depicted in FIG. 5, the network physical configuration database 17 includes switch identifiers (IP addresses, in this example) for identifying the respective switches present in the file distribution system 1, and server identifiers (IP addresses, in this example) of servers 3 under the respective switches.

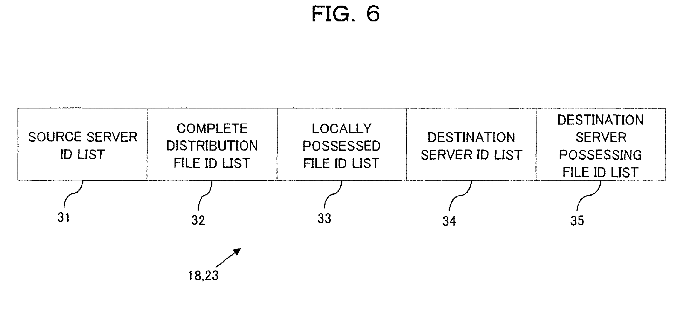

A distribution file database 18 is a database of files to be distributed to the servers 3. FIG. 6 depicts an exemplary data structure of the distribution file database 18.

In the example depicted in FIG. 6, the distribution file database 18 includes a source server identifier list 31, a complete distribution file identifier list 32, a locally possessed file identifier list 33, a destination server identifier list 34, and a destination server possessing file identifier list 35. The source server identifier list 31 is a list of identifiers of the servers 3 assigned as source servers. The complete distribution file identifier list 32 is a list of identifiers of files to be distributed from the source servers to servers 3 subordinate to the source servers (hereinafter, such servers 3 are refereed to as subordinate servers). The locally possessed file identifier list 33 is a list of identifiers for identifying distribution files which have been obtained by each server 3. The destination server identifier list 34 is a list of identifiers for identifying one or more servers 3 in immediate subordinate node(s), to which the distribution files are to be distributed. The destination server possessing file identifier list 35 is a list of identifier(s) of one or more files to be distributed to the one or more servers 3 in the immediate subordinate node(s).

Although the IP addresses of the servers 3 are employed as the identifiers for the servers 3 here, the identifiers of the servers 3 are not limited to their IP addresses.

The status monitoring database 14, the CPU load database 15, the network load database 16, the network physical configuration database 17, and the distribution file database 18 may be stored in an HDD (not illustrated), for example.

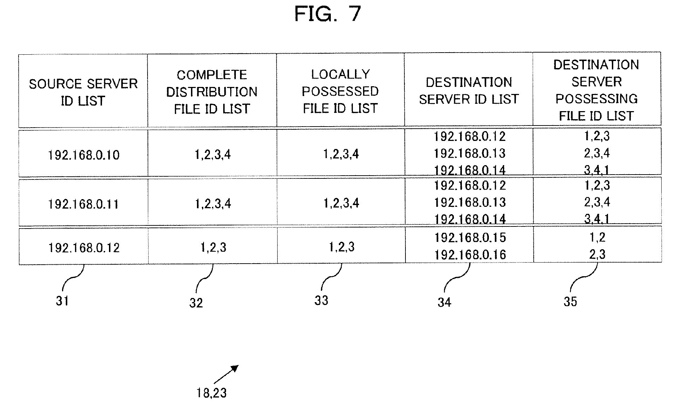

FIG. 7 depicts an example of part of data in the distribution file database 18.

Each server 3 can function as a destination server that receives distribution files are distributed from the master server 2, as well as functioning as a source server for distributing the received distribution files to other servers 3. The servers 3 can communicate with each other peer-to-peer (P2P). As used herein, a P2P communication is a communication between servers 3 without requiring any intervention of the master server 2, and it can be embodied using various techniques.

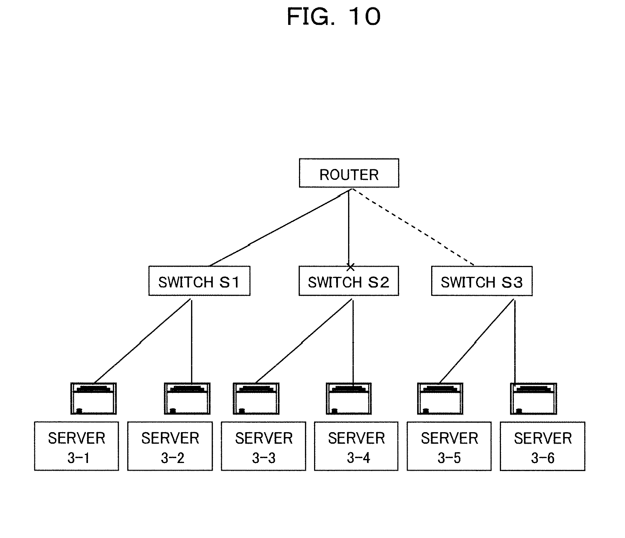

Each server 3 is connected to the network 10 through a switch (refer to FIG. 10) or a router.

Next, the configuration of the server 3 will be described.

The servers 3 may be computers or communication apparatuses, each including a CPU (not illustrated), a memory (ROM and RAM), a hard disk drive, and other components.

The servers 3 in the file distribution system 1 have the same or substantially the same configurations.

As depicted in FIG. 1, each server 3 has a file distribution controller 21, a file manager 22, and a distribution file database 23, which is similar to the distribution file database 18 described above.

A hard disk drive in each server 3 contains the distribution file database 23, as well as distribution files obtained from the master server 2 and/or other servers 3.

In response to an instruction from the master server 2 or a superior server 3, the file distribution controller 21 looks up the distribution file database 23 (described later), and initiates distribution of distribution files to node(s) that are immediately below the node where the server 3 belongs.

The file manager 22 looks up the distribution file database 23 (described later). If there is any distribution file(s) not possessed by the local server 3, the file manager 22 makes an inquiry to obtain the not-yet-obtained distribution file(s) from a counterpart server 3 peer-to-peer. In contrast, when receiving an inquiry for a distribution file from a counterpart server 3, the file manager 22 looks up the distribution file database 23 (described later), and sends the requested file to the requesting server 3 if the local server 2 possess that file. The definition of server pairs for exchanging not-yet-obtained distribution data may be defined in advance and is stored in each server 3. Otherwise, the master server may distribute the definition as supplementary information to a distribution file, and each server 3 may identify their counterpart by looking up the supplementary information.

The distribution file database 23 has the data structure similar to that of the distribution file database 18 in the master server 1. As will be described later, the distribution file database 23 in each server 3 is updated so as to be in sync with the distribution file database 18 and the distribution file databases 23 in other servers 3.

The distribution file database 23 may include a source server identifier list 31, a complete distribution file identifier list 32, a locally possessed file identifier list 33, a destination server identifier list 34, and a destination server possessing file identifier list 35. The source server identifier list 31 is a list of identifiers of the server 3 designated as source servers. The complete distribution file identifier list 32 is a list of identifiers of files to be distributed from the source servers to servers 3 subordinate to the source servers. The locally possessed file identifier list 33 is a list of identifiers for identifying distribution files which have been obtained by each server 3. The destination server identifier list 34 is a list of identifiers for identifying one or more servers 3 in immediate subordinate node(s), to which the distribution files are to be distributed. The destination server possessing file identifier list 35 is a list of identifier(s) of one or more files to be distributed to one or more servers 3 in immediate subordinate node(s).

Although the IP addresses of the servers 3 are employed as the identifiers for the servers 3 here, the identifiers of the servers 3 are not limited to their IP addresses.

The file manager 22 searches the source server identifier list 31 in the distribution file database 23, using the identifier (IP address in the present embodiment) of the local server 3 as a key, to identify the identifier of the server in the node immediately superior to the node where the local server 3 belongs. As used herein, the expressions "higher" and "superior" refer to nodes closer to the root, whereas "lower" and "subordinate" refer to a node closer to the bottom.

The file manager 22 searches the locally possessed file identifier list 33 in the local server 3, using the identifier of the local server 3 as a key, and compares the found entries in this search against entries in the complete distribution file identifier list 32 in the distribution file database 23, to identify not-yet-obtained distribution files not possessed by the local server 3.

Further, the file manager 22 searches the destination server identifier list 34 in the distribution file database 23, using the identifier of the local server 3 as a key, to find one or more subordinate servers 3 for distributing a subset of distribution files which the local server 3 receives from its superior server.

The file manager 22 also searches the destination server possessing file identifier list 35 in the distribution file database 23 using the identifier of the local server 3 as a key, to identify files to be distributed from the local server 3 to the one or more subordinate servers 3.

Although the distribution file database 18 in the master server 2 and the distribution file databases 23 in the servers 3 have the similar structure in an exemplary embodiment, the distribution file database 18 and the distribution file databases 23 may be structured differently. For example, the distribution file database 23 in the server 3 may contain only the identifiers of source servers immediately superior to the local server 3 and related information.

### (B) System Operation

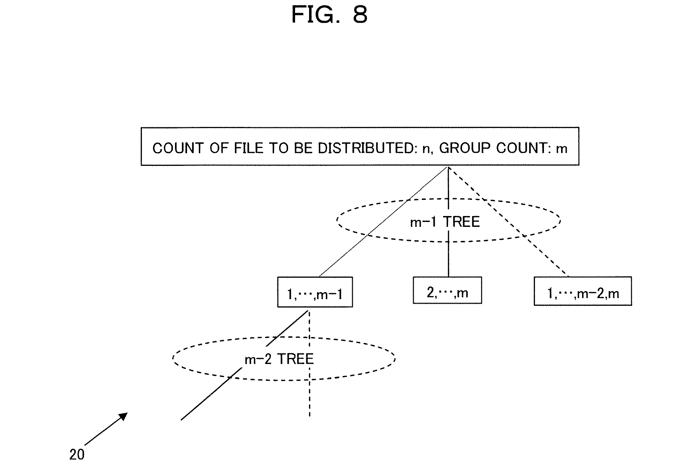

Next, the operation of the file distribution system 1 as an exemplary embodiment configured as described above will be described.
(1) Hereinafter, generation of a distribution scheme 20 by the distribution scheme generator 12 will be described with reference to FIG. 8. As an example, the distribution scheme 20 is a tree structure having multiple nodes.

In this example, j percents (%, j is a number greater than zero and smaller than 100) of i servers 3 (i is an integer more than 1) are selected.
(1-1) Here, j (%) of i servers 3 are selected as source server. The percentage j may be determined in advance based on a parameter, such as the system status, for example.
(1-2) Next, if the factorial of n is greater than i x j (i.e., n! > i x j, where n is the total count of files to be distributed and is an integer greater than 1), the n distribution files is divided into m groups (m is an integer greater than 0). The value of m is determined such that n / m < i x j stands.
(1-3) A tree is then generated. The tree as a distribution scheme 20 is generated by generating branches, starting from an m - 1 tree on the top, until the number of branches is reduced to one (m = n in this example, where n < i x j), as in the tree in FIG. 8. In the example depicted in FIG. 8, m - 1 nodes are branched out from the root, and m - 2 nodes are branched out from the respective nodes immediately subordinate to the root. This branch generation is repeated until the number of branches is reduced to one.

The tree is generated as follows. As described previously, a single file defines one group (i.e., m = n) in this example, a single file defines one group.

An (m - 1) tree is generated. The files are sorted into an array, such as File 1, File 2, File 3, File 4, and so on. Starting from the first file, m - 1 files are picked up from the sorted file array. Then, m - 1 files are picked up from the sorted file array, starting from the second file of the array. Next, m - 1 files are picked up from the sorted file array, starting from the third file of the array, and this operation is repeated. After advanced to the end of the array, obtainment is continued from the first file until m - 1 files are obtained. This obtainment is repeated until m - 1 branches are obtained.

Next, an m - 2 tree is generated from each node in the generated m - 1 tree. Starting from the first file in the first node in the m - 1 tree, m - 2 files are obtained. This obtainment is repeated to generate m - 2 branches. Then generation of branches is repeated at the next node.

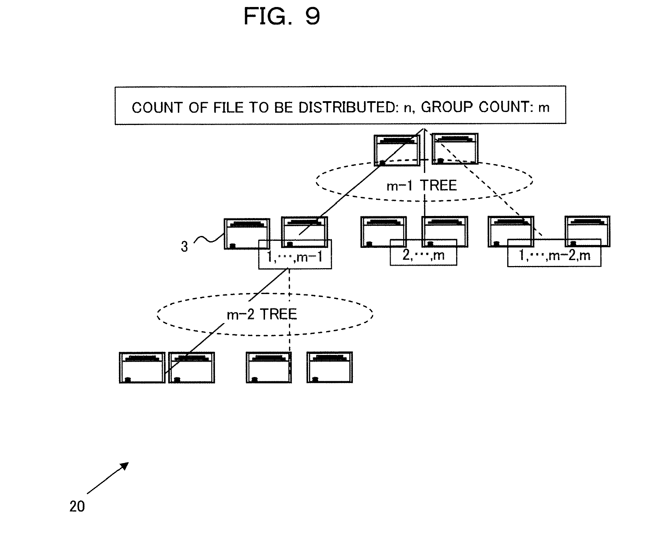

This operation is repeated until the number of branches is reduced to one.
(2) Next, as depicted in FIG. 9, the server allocator 11 allocates the server 3 in the tree generated as described above as the distribution scheme 20. The allocation by the server 3 will be described hereinafter.
(2-1) Firstly, j (%) of i servers 3 are selected according to the CPU loads and/or the network loads, and are sorted into a server array.
(2-2) Next, to the tree generated in the previous step, (i x j / 100) / (total node count) servers of i x j servers 3 are allocated to each nodes in the sort order in Step (2-1), from the top to bottom nodes in the tree.

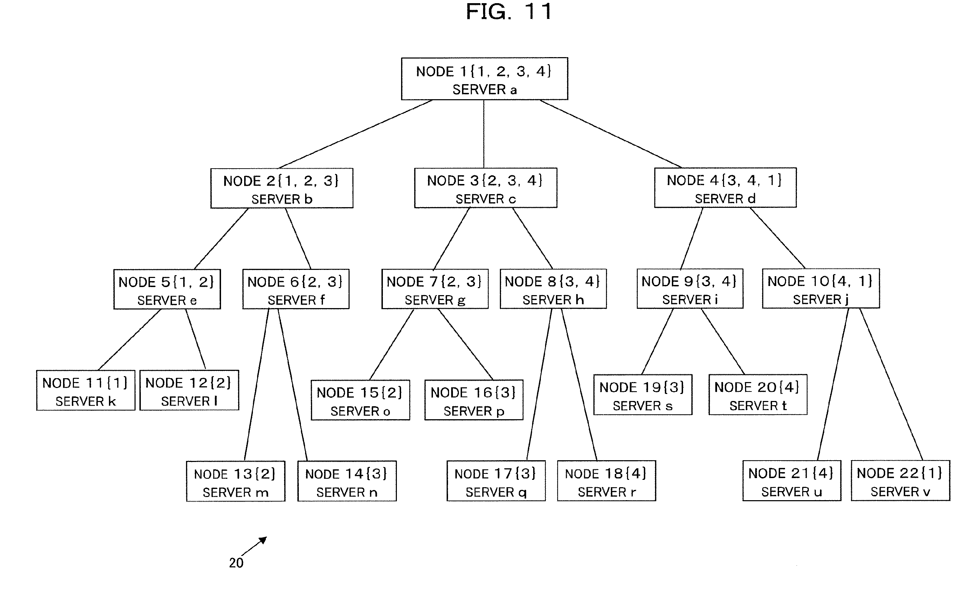

For example, when 5% of 10,000 servers 3 are allocated to 22 nodes in FIG. 11, i is 10000, j is 5, and the total node count is 22. Therefore, 22 servers namely, (10000 x 0.05) /22, about 22 servers, are to be allocated to each node.

In addition to selecting servers 3 based on the CPU and/or network loads in the above Step (2-1), servers 3 may be selected based on the network physical configuration. Selection based on the network physical configuration will be described with reference to FIG. 10.

In the example in FIG. 10, six servers 3, namely, servers 3-1 to 3-6, are shown, for example. The CPU load of the server 3-3 is the lowest, followed by the servers 3-4, 3-1, 3-5, and 3-2, in the ascending order of the CPU loads, and the server 3-6 is experiencing the highest load, at the time of this selection.

In selection of two source-candidate servers 3 based on the CPU load, the servers 3-3 and 3-4 would be selected.

As depicted in FIG. 10, the servers 3-3 and 3-4 are both under Switch S2. Therefore, when distribution files are allocated to the servers 3-3 and 3-4, the redundancy is not ensured upon a failure of Switch S2.

Thus, the switches, to which the top two servers 3-4 and 3-3 are connected, are checked. When the top two servers are connected to a single switch, the second highest switch 3-4 is omitted. Instead, the server 3-1, which is connected to a different switch from that of the server 3-3 and having the lowest CPU load following the servers 3-3 and 3-4, is selected. As a result, the servers 3-3 and 3-1 are selected. Therefore, the server 3-1 under Switch S1 can distribute distribution files even when Switch S2 fails and the server 3-3 becomes unavailable.

Next, generation of a distribution scheme of distribution file groups and allocation of the servers to the distribution scheme will be described with reference to FIG. 11, in the context of an example, wherein the count "n" of distribution files is 4, and the distribution scheme is hierarchical.

In the example in FIG. 11, four distribution files are to be distributed, which have substantially the same sizes, without need of division. In such a case, the count "n" of files to be distributed is 4, and the group count "m" is also 4. If each group has a single file to be distributed as in this example, "groups" may be referred to as "distribution files".

Hereinafter, these four files are denoted by "1 ", "2", "3", and "4".

The distribution scheme generator 12 in the master server 2 specifies the file group {1, 2, 3, 4} including all of the four distribution files as Node 1, and specifies the file groups {1, 2, 3}, {2, 3, 4}, and {3, 4, 1} including three of the four distribution files as Nodes 2, 3, and 4, respectively. The nodes are generated as follows, as set forth above. The files are sorted, in accordance with file sizes or file names, such as File 1, File 2, File 3, and File 4. Starting from the first file, n - 1 files are picked up from the sorted file array. Then, n - 1 files are picked up from the sorted file array, starting from the second file of the array. Next, n - 1 files are picked up from the sorted file array, starting from the third file of the array, and this operation is repeated. After advanced to the end of the array, obtainment is continued from the first file until n-1 files are obtained.

The distribution scheme generator 12 then generates Node 5 {1, 2} and Node 6 {2, 3}, as subordinate nodes of subsets of Node 2 {1, 2, 3}. It also generates Node 7 {2, 3} and Node 8 {3, 4}, as subordinate nodes of subsets of Node 3 {2, 3, 4}. It also generates Node 9 {3, 4} and Node 10 {4, 1}, as subordinate nodes of subsets of Node 4 {3, 4, 1}.

Finally, the distribution scheme generator 12 generates, as the bottom nodes, Node 11 {1} and Node 12 {2}, as subordinate nodes of subsets of Node 5 {1, 2}. Similarly, the distribution scheme generator 12 generates Nodes 13-22 as the bottom nodes, as nodes of the subsets of the groups.

The distribution scheme generator 12 allocates servers 3 to Nodes 1-22.

For example, the distribution scheme generator 12 allocates, Server "a" to Node 1, Server "b" to Node 2, Server "c" to Node 3, Server "d" to Node 4, and so on. The Servers a-u to be allocated are sorted according to the CPU and/or network loads, and are selected, taking the network configuration into consideration.

Next, the master server 2 pushes all the four files of Group 1-4 to Server "a" allocated to Node 1, which is to have all the four files, for example. Server "a" receiving the four files is preferably a server having a lower CPU or network load, since subsequent peer-to-peer file distributions may incur a further load on that server.

Simultaneously to the push of Files 1-4, the master server 2 also pushes the source server identifier list 31, the complete distribution file identifier list 32, the destination server identifier list 34, and the destination server possessing file identifier list 35. Server "a" updates the source server identifier list 31, the complete distribution file identifier list 32, the destination server identifier list 34, and the destination server possessing file identifier list 35 in the distribution file database 23 in the local server, as well as updating the locally possessed file identifier list 33 in the distribution file database 23, using the pushed information.

The Server "a" pushes three files of Groups 1-3 to Server "b" allocated to Node 2, which is to have three of the four files. Similarly, Server "a" pushes three files of Groups 1, 2, and 4 to Server "c" allocated to Node 3. Server "a" pushes three files of Groups 3, 4, and 1 to Server "d" allocated to Node 4. Similarly, Server "a" also pushes the source server identifier list 31, the complete distribution file identifier list 32, the destination server identifier list 34, and the destination server possessing file identifier list 35 to Server "b", "c", and "d". Based on the lists and identifiers of the distributed distribution files, Servers "a", "b", "c", and "d" update their own distribution file database 23 in the similar manner.

Further, a superior server 3 pushes two groups of files to server(s) allocated to a node, which is to have two groups of the four groups. For example, Server "e" pushes three files of Groups 1 and 2 to Server "b" allocated to Node 5. Server "f" pushes files of Groups 2 and 3 to Server "f" allocated to Node 6. Server "f" pushes files of Groups 2 and 3 to Server "g" allocated to Node 7. Server "f" pushes files of Groups 4 and 3 to Server "h" allocated to Node 8. Server "f" pushes files of Groups 4 and 3 to Server "i" allocated to Node 9. Server "f" pushes files of Groups 4 and 1 to Server "j" allocated to Node 10. Similarly, the server also pushes the source server identifier list 31, the complete distribution file identifier list 32, the destination server identifier list 34, and the destination server possessing file identifier list 35 to the servers. Based on the lists identifiers of the distributed distribution files, Servers "e" to "j" update the distribution file database 23.

Finally, a subordinate server 3 pushes one group of files to bottom Servers "k" to "v" allocated to a node, which is to have only one group of the four groups. Similarly, the server also pushes the source server identifier list 31, the complete distribution file identifier list 32, the destination server identifier list 34, and the destination server possessing file identifier list 35 to the servers. Based on the lists identifiers of the distributed distribution files, Servers "k" to "v" update the distribution file database 23.

If multiple servers 3 are allocated to a node, files may be pushed to one of these servers 3 in that node and other servers in the node may receive the files from that server 3 peer-to-peer.

Next, each server 3 obtains the distribution files, which are to be obtained but has not been distributed yet (hereinafter, such files may be referred to as "not-yet-obtained distribution files"). The file manager 22 in each server 3 requests at least one server to send the not-yet-obtained distribution files 3 by looking up the distribution file database 23. If there does any server possess a not-yet-obtained file in the node where the requested server 3 belongs, the requested server 3 requests that server 3 to send that file. Then the requested server 3 sends the one to the requester. If no server in the node possesses it, the server 3 inquires servers in one or more adjacent nodes. The request is made recursively until all not-yet-obtained files are obtained.

For example, Server "b" belonging to Node 2 and having received files in Groups 1, 2, and 3 looks up the distribution file database 23. The Server B then looks up the complete distribution file identifier list 32 and the locally possessed file identifier list 33 in the distribution file database 23, and obtains the not-yet-obtained file in Group 4 from Server "a" peer-to-peer. Server "b" sends the locally possessed file identifier list 33. Server "a" also updates its destination server possessing file identifier list 35.

The servers 3 belonging to the same level can send and receive files in parallel during the obtainment of not-yet-obtained files, which can increase the speed of the file distribution.

The pairs for complementarily replenishment of not-yet-obtained distribution files may be defined in advance and stored in each server 3, or information on the pairs may be sent from the master server 2 as supplementary information to distribution files.

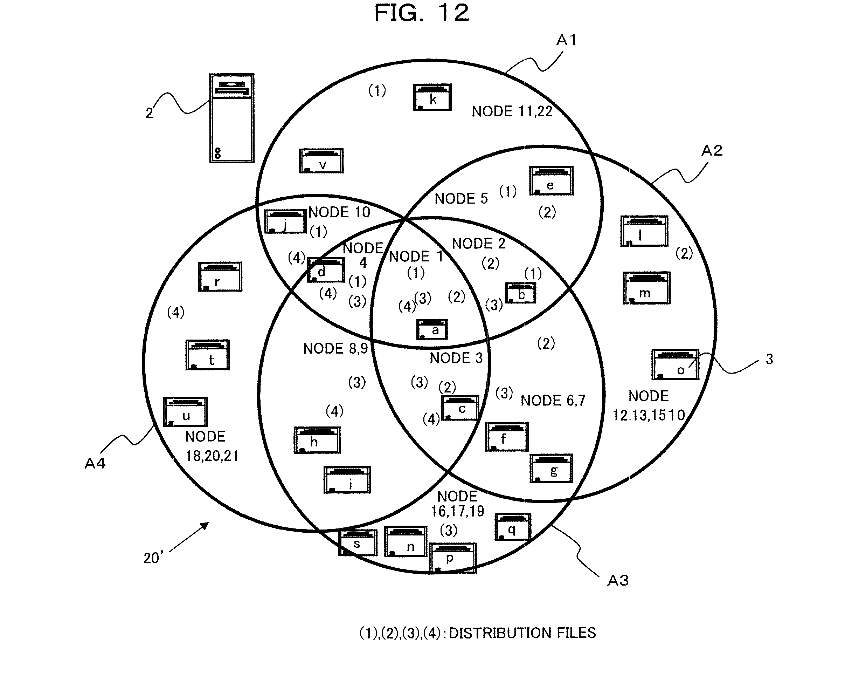

The distribution scheme as discussed above can also be expressed in a Venn diagram. FIG. 12 is a Venn diagram of the distribution scheme in FIG. 11.

In FIG. 12, Areas A1-A4 denoted by (1)-(4) represent distribution of Files 1-4, respectively. The products of the Areas A1-A4 represent distributions of multiple files.

Hence, definition of a distribution scheme can be construed as definition of subsets of the distribution files.

The example described above dynamically defines a distribution scheme and allocation of the servers to the distribution scheme. Upon dynamical definition of a distribution scheme and allocation of the servers to the distribution scheme, the resultant distribution scheme may be distributed from the master server 2 to the server 3 as supplementary information to distribution files.

In another embodiment, the master server 2 may define a distribution scheme and server allocation, and the resultant distribution scheme and server allocation may be stored in every server 3.

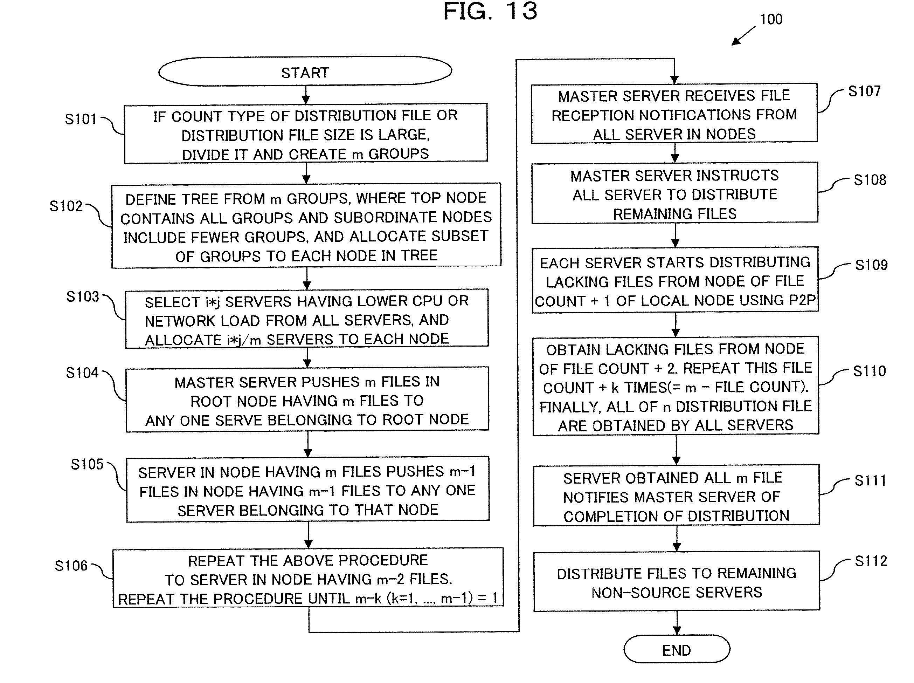

The present disclosure also contemplates a method of distributing files. A method 100 of distributing files will be described with reference to the flowchart in FIG. 13.

Firstly, in Step S101, the distribution scheme generator 12 in the master server 2 divides distribution files, if the count of the types or sizes of the distribution files are large, to generate m groups.

Next, in Step S102, the server allocator 11 in the master server 2 defines a tree from the m groups, and allocates subsets of the groups to the respective node in the tree. The tree is generated such that all distribution files are included in the top node, and the counts of distribution files in nodes are reduced as descending the structure toward the bottom.

Next, in Step S103, the server allocator 11 in the master server 2 selects i x j servers 3 (i is the total count of the servers 3, and j is the percentage % of the i servers 3 to be selected) having smaller CPU or network loads, as source servers, from all of the server 3, and allocates i x j / (total node count) serves 3 to each node in the tree.

Next, in Step S104, the distributing unit 13 in the master server 2 makes servers 3 belonging to an m-distribution-file node, push m distribution files belonging to that node, to any one server 3 belonging to the node, which is an m-distribution-file root node. If there are multiple servers 3 allocated to the root node, one or more servers 3 may receive the distribution files, and the remaining servers 3 belonging to the root node may obtain m distribution files from the servers 3 peer-to-peer. The servers 3 in the root node obtained the distribution files notify the master server 2 of completion of the distribution.

Next, in Step S105, one or more servers 3 belonging to the m-distribution-file node make servers 3 belonging to an (m - 1)-distribution-file node, push (m - 1) distribution files belonging to that node, to any one server 3. Similarly, if there are multiple servers 3 allocated to the (m - 1)-distribution-file node, one or more servers 3 may receive the distribution files, and the remaining servers 3 belonging to that (m - 1)-distribution-file node, may obtain the (m - 1) distribution files from the servers 3 files peer-to-peer. The servers 3 in that node obtained the distribution files notify the master server 2 of completion of the distribution.

Next, in Step S106, one or more servers 3 belonging to the (m - 1)-distribution-file node repeat the above processing on servers 3 belonging to an (m - 2)-distribution-file node. The above processing is repeated until m - i (k = 1, ..., m - 1) = 1, and the servers 3 belonging to each node share the distribution files provided to that node.

Next, in Step S107, the master server 2 receives notifications of completion of reception of the distribution files to all the servers 3 belonging to the nodes.

In Step S108, the master server 2 issues an instruction to all of the servers 3 selected as source servers to initiate distribution of remaining distribution files.

In Step S109, each server 3 obtains one or more not-yet-obtained distribution files from node(s) having (file count of local node + 1) files peer-to-peer.

Next, in Step S110, each server 3 obtains one or more not-yet-obtained distribution files from node(s) having (file count of local node + 2) files. This processing is repeated (file count of local node + k) times (k = m - file count), and all of the n distribution files are distributed to every server 3 selected as source servers.

Next, in Step S111, the servers 3 which have obtained all of the n files send a notification of distribution completion to the master server 2.

Finally, in Step S112, the distributing unit 13 in the master server 2 issues an instruction to initiate file distribution among the servers 3 peer-to-peer. As a result, all of the distribution files are distributed to other non-source servers 3.

As described above, in the file distribution system 1 and a method 100 of distributing files as an exemplary embodiment, the master server 2 groups distribution files, generates a distribution scheme including at least one of the groups, and allocates servers selected as source servers to the distribution scheme, rather than the master server 2 distributing the respective distribution files to every subordinate server 3. The servers 3 are allocated according to loads and/or network configuration of the server 3. Then, the master server 2 distributes files in the groups to one or more servers 3 in each node in the distribution scheme. Thereafter, servers 3 obtain not-yet-obtained distribution files from other servers 3 peer-to-peer.

In this technique, the servers 3 function as source servers, which ensures the redundancy of the master server 2. Thus, upon a failure of the master server 2, servers 3 selected as source servers can distribute distribution files to each server in the file distribution system 1.

Further, the master server 2 distributes distribution files to only some servers 3, which helps to reduce the network load.

The number of branches branched out from a node is reduced as descending down toward the bottom in a tree defining a distribution scheme in the above-described embodiment, this is not limiting.

### (C) First Modification

Hereunder, the configuration of a first modification to an embodiment of the present disclosure will be described with reference to the drawings.

This first modification employs alternative generation of a distribution scheme, to the above-described embodiment.

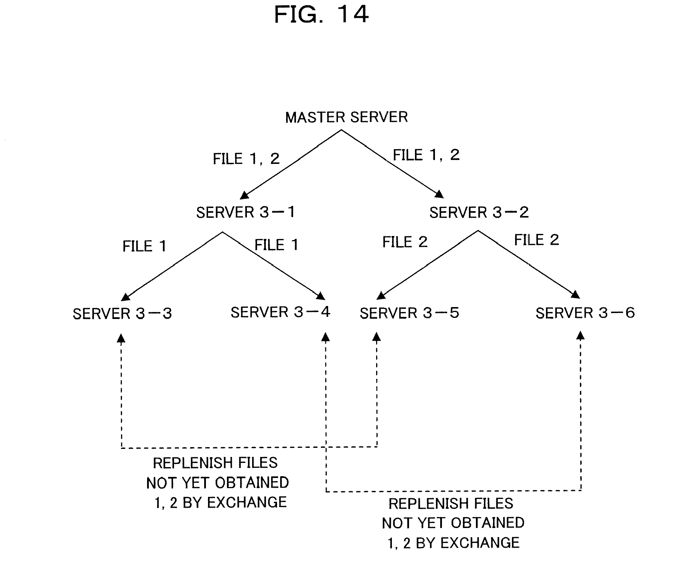

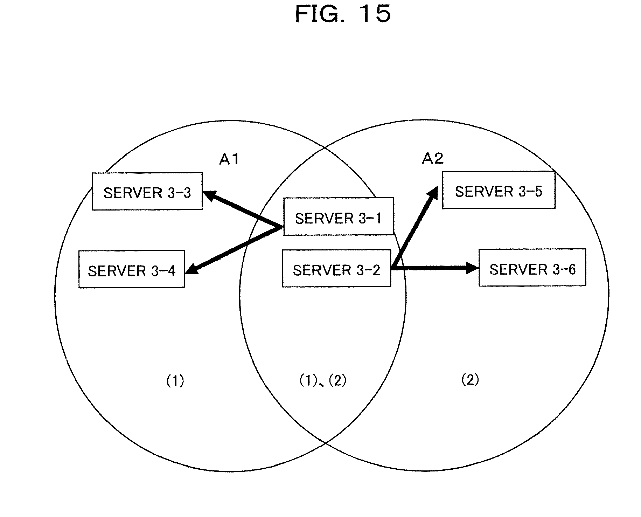

FIG. 14 is a schematic diagram illustrating a distribution scheme in a file distribution system as a first modification to an embodiment, and FIG. 15 is a Venn diagram illustrating this distribution scheme.

In the modification in FIG. 14, a distribution scheme is generated in a manner different from the above embodiment, wherein the number of branches is constant in both superior and subordinate nodes. Other function and configuration of a master server 2 and servers 3 are same as those in the above-described embodiment.

A master server 2 distributes Distribution Files 1 and 2 to servers 3-1 and 3-2.

The server 3-1 distributes Distribution File 1 to the servers 3-3 and 3-4, and the server 3-2 distributes Distribution File 2 to the servers 3-5 and 3-6.

Thereafter, the server 3-3 and the server 3-5 exchange Distribution Files 1 and 2, and the server 3-4 and the server 3-6 exchange Distribution Files 1 and 2. During these exchanges, transmission of Distribution File 1 by the server 3-3, reception of Distribution File 1 by the server 3-5, transmission of Distribution File 2 by the server 3-5, and reception of Distribution File 2 by the server 3-3 occur simultaneously. This can help to improve the distribution speed.

It is noted that the pairs for complementarily replenishment of not-yet-obtained distribution files may be defined in advance and stored in each server 3, or information on the pairs may be sent from the master server 2 as supplementary information to distribution files.

FIG. 15 is a Venn diagram illustrating the distribution pattern in FIG. 14.

In FIG. 15, Areas A1 and A2 denoted by (1) and (2) represent distribution of Files 1 and 2, respectively. The product of the Areas A1 and A2, A1 ∩ A2, represents distribution of multiple files.

Hence, definition of a distribution scheme can be construed as definition of subsets of the distribution files.

In addition to the advantageous effects of the above-described embodiment, the distribution speed can be enhanced since, during these exchanges, transmission of Distribution File 1 by the server 3-3, reception of Distribution File 1 by the server 3-5, transmission of Distribution File 2 by the server 3-5, and reception of Distribution File 2 by the server 3-3 occur simultaneously.

### (D) Second Modification

Hereunder, the configuration of a second modification to an embodiment of the present disclosure will be described with reference to the drawings.

This second modification employs alternative generation of a distribution scheme, to the above-described embodiment.

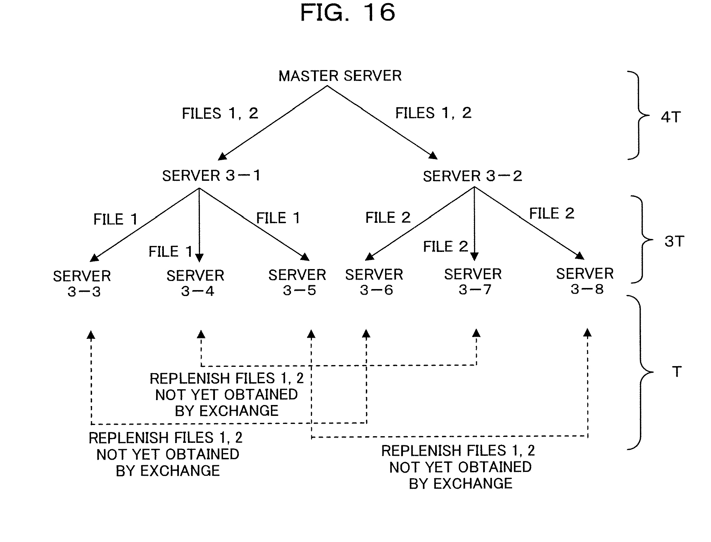

FIG. 16 is a schematic diagram illustrating a distribution scheme in a file distribution system as a second modification to an embodiment.

Although the example depicted in FIG. 16 exemplifies a case where Distribution Files 1 and 2 are distributed from a master server 2 to servers 3 as in FIG. 14, the third level has more branches than the second level. In other words, as depicted in FIG. 16, subordinate nodes have more branches than nodes superior to them. Other function and configuration of the master server 2 and servers 3 are same as those in the above-described embodiment.

For example, in a distribution scheme where both Files 1 and 2 are distributed to subordinate servers 3, assuming that the time required for distribution of File 1 and the time required for distribution of File 2 are both T, 4T is required for distributing Files 1 and 2 from the master server 2 to servers 3-1 and 3-2. Further, 6T is required for distributing Files 1 and 2 from the server 3-1 to servers 3-3, 3-4, and 3-5. During this time of 6T, Files 1 and 2 are also distributed from the server 3-2 to servers 3-6, 3-7, and 3-8. Accordingly, the total time required for distributing Files 1 and 2 to the servers 3-1 to 3-8 is 4T + 6T = 10T.

In contrast, in the distribution scheme in FIG. 16, although 4T is required for distributing Files 1 and 2 from a master server to servers 3-1 and 3-2, only 3T is required for distributing File 1 from the server 3-1 to servers 3-3, 3-4, and 3-5. During this time of 3T, File 1 is also distributed from the server 3-3 to servers 3-6, 3-7, and 3-8. Then, file exchanges between the servers 3-3 and 3-6, between the servers 3-4 and 3-7, and between the servers 3-5 and 3-8 are done in time T. As a result, the total time required for distributing Files 1 and 2 to the servers 3-1 to 3-8 is 4T + 3T + T = 8T, which represents a reduction in the distribution time as compared to the above scheme where both Files 1 and 2 are distributed to subordinate servers 3.

In addition to the advantageous effects of the above-described embodiment and the first modification thereto, the second modification is advantageous in that distribution files can be distributed to an increased number of servers 3 in the same distribution time, by increasing the number of branches. This can help to reduce the network traffic.

### (E) Others

The disclosed technique is not limited to the embodiment and its modifications thereto as described above, and various modifications may be contemplated without departing from the spirit of the present embodiment.

Although source servers are selected according to the CPU and/or network loads, and/or the network configuration in the above-described embodiment, servers may be selected based on other status parameters, for example.

Although distribution files are update and/or revision files in the above-described embodiment, distribution files may be of other types, such as multi-media files, for example.

Although a hierarchical structure, such as a tree, is defined as a distribution scheme in the above-described embodiment, subsets of file groups may be defined otherwise, such as by using a Venn diagram.

Although files are pushed from the master server 2 or superior servers 3 to every server 3 under the control of the distributing unit 13 in the master server 2 in the above-described embodiment, the file counts and/or file sizes of the pushed files may be varied according to the loads (e.g., the CPU and network loads) of the servers, for example.

Although the IP addresses of the master server, servers, and switches are used as their identifiers in the above-described embodiment, this is not limiting and other information, such as MAC addresses, may be used to identify them.

In the disclosed technique, a central processing unit (CPU) in the master server 2 may function as the server allocator 11, the distribution scheme generator 12, the distributing unit 13, the status monitoring database 14, and the distribution file database 18, by executing a program for distributing files.

Further, CPUs in the servers 3 may function as the file distribution controller 21, the file manager 22, and the distribution file database 23, by executing a program for distributing files.

Note that the program (program for distributing files) for implementing the functions as the server allocator 11, the distribution scheme generator 12, the distributing unit 13, the status monitoring database 14, the distribution file database 18, the file distribution controller 21, the file manager 22, and the distribution file database 23 are provided in the form of programs recorded on a computer readable recording medium, such as, for example, a flexible disk, a CD (e.g., CD-ROM, CD-R, CD-RW), a DVD (e.g., DVD-ROM, DVD-RAM, DVD-R, DVD+R, DVD-RW, DVD+RW, HD-DVD), a Blu Ray disk, a magnetic disk, an optical disk, a magneto-optical disk, or the like. The computer then reads a program from that storage medium and uses that program after transferring it to the internal storage apparatus or external storage apparatus or the like. Alternatively, the program may be recoded on a storage device (storage medium), for example, a magnetic disk, an optical disk, a magneto-optical disk, or the like, and the program may be provided from to the storage device to the computer through a communication path.

Upon implementing the functions as the server allocator 11, the distribution scheme generator 12, the distributing unit 13, the status monitoring database 14, the distribution file database 18, the file distribution controller 21, the file manager 22, and the distribution file database 23, the program for distributing files stored in an internal storage device (RAM or ROM in the servers) is executed by a microprocessor in a computer (the CPUs in the servers in this embodiment). In this case, the computer may alternatively read a program stored in the storage medium for executing it.

Note that, in this embodiment, the term "computer" may be a concept including hardware and an operating system, and may refer to hardware that operates under the control of the operating system. Alternatively, when an application program alone can make the hardware to be operated without requiring an operating system, the hardware itself may represent a computer. The hardware includes at least a microprocessor, e.g., CPU, and a means for reading a computer program recorded on a storage medium and, in this embodiment, the master server 2 and the servers 3 include a function as a computer.

In accordance with one embodiment, the time required for distribution of files (data) can be reduced.

Further, in accordance with another embodiment, routes for the file (data) distribution can be modified according to the system status.

Further, in accordance with one embodiment, redundancy can be ensured to distribution routes when distributing the files (data).

Further, in accordance with a further embodiment, the distribution speed can be increased since the data is transmitted and received simultaneously.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be construed that the various changes, substitutions, and alterations could be made hereto without departing from the spirit and scope of the invention.

## Claims

1. A method (100) of distributing a plurality of distribution files from a master server (2) possessing the plurality of distribution files to a plurality of servers (3), the method comprising:
generating a distribution scheme (20) having a tree structure, the tree structure comprising a plurality of nodes in a plurality of levels and having the master server (2) in a top node, wherein a distribution file group including at least one of the plurality of distribution files is to be allocated to each node, and a subordinate node is to include a subset of a distribution file group allocated to a superior node, which is located a level superior to the subordinate node;
allocating at least one of the servers (3) to each node in the distribution scheme (20), based on system status information indicating a status of at least one of the master server (2) or the plurality of servers (3);
distributing at least one distribution file to each server (3), to be allocated to a node corresponding to the server (3), based on the distribution scheme (20); and
exchanging distribution files not possessed by servers (3) corresponding to each node directly among the servers (3) corresponding to the each nodes, based on distribution file management information, the distribution file management information comprising, for each node in the distribution scheme (20), superior node information (31) indicating at least one node superior to the node, distribution file information (32) indicating a distribution file to be distributed, possessed distribution file information (33) indicating distribution files possessed by the node, subordinate node information (34) indicating at least one node subordinate to the node, and subordinate possessing distribution file information (35) indicating a distribution file to be possessed by the at least one subordinate node.

2. The method according to claim 1, wherein the allocating comprises allocating servers (3) experiencing lower CPU loads to superior nodes in the distribution scheme (20).

3. The method according to claim 1, wherein the allocating comprises allocating servers (3) experiencing lower network loads to superior nodes in the distribution scheme (20).

4. The method according to one of claims 1 to 3, wherein the allocating comprises allocating servers (3) to superior nodes in the distribution scheme (20) based on a network configuration of the servers (3).

5. A file distribution system (1) including a master server (2) configured to possess a plurality of distribution files and a plurality of servers (3) to which the distribution files are to be distributed, the file distribution system comprising:
a distribution scheme generator (12) configured to generate a distribution scheme (20) having a tree structure, the tree structure comprising a plurality of nodes in a plurality of levels and having the master server (2) in a top node, wherein a distribution file group including at least one of the plurality of distribution files is to be allocated to each node, and a subordinate node is to include a subset of a distribution file group allocated to a superior node, which is located a level superior to the subordinate node;
a system status database (14) configured to store a status of the system as system status information;
an allocator (11) configured to allocate at least one of the servers (20) to each node in the distribution scheme (20), based on the system status information;
a distribution file management database (18, 23) configured to contain distribution file management information, the distribution file management information comprising, for each node in the distribution scheme, superior node information (31) indicating at least one node superior to the node, distribution file information (32) indicating a distribution file to be distributed, possessed distribution file information (33) indicating distribution files possessed by the node, subordinate node information (34) indicating at least one node subordinate to the node, and subordinate possessing distribution file information (35) indicating a distribution file to be possessed by the at least one subordinate node; and
a distributing unit (13) configured to distribute at least one distribution file to each server (3), to be allocated to a node corresponding to the server (3), based on the distribution scheme (20),
wherein distribution files not possessed by servers (3) corresponding to each node is exchanged directly among the servers (3) corresponding to the each nodes, based on the distribution file management information.

6. A master server (2) configured to possess a plurality of distribution files to be distributed to a plurality of servers (3), the master server comprising:
a distribution scheme generator (12) configured to generate a distribution scheme (20) having a tree structure, the tree structure comprising a plurality of nodes in a plurality of levels and having the master server (2) in a top node, wherein a distribution file group including at least one of the plurality of distribution files is to be allocated to each node, and a subordinate node is to include a subset of a distribution file group allocated to a superior node, which is located a level superior to the subordinate node;
a system status database (14) configured to store a status of the system as system status information;
an allocator (11) configured to allocate at least one of the servers (20) to each node in the distribution scheme (20), based on the system status information;
a distribution file management database (18, 23) configured to contain distribution file management information, the distribution file management information comprising, for each node in the distribution scheme, superior node information (31) indicating at least one node superior to the node, distribution file information (32) indicating a distribution file to be distributed, possessed distribution file information (33) indicating distribution files possessed by the node, subordinate node information (34) indicating at least one node subordinate to the node, and subordinate possessing distribution file information (35) indicating a distribution file to be possessed by the at least one subordinate node; and
a distributing unit (13) configured to distribute at least one distribution file to each server (3), to be allocated to a node corresponding to the server (3), based on the distribution scheme (20).

7. The master server (2) according to claim 6, wherein the allocator (11) is further configured to allocate servers (3) experiencing lower CPU loads to superior nodes in the distribution scheme (20).

8. The master server (2) according to claim 6, wherein the allocator (11) is further configured to allocate servers (3) experiencing lower network loads to superior nodes in the distribution scheme (20).

9. The master server (2) according to any one of claims 6 to 8, wherein the allocator (11) is further configured to allocate servers (3) to superior nodes in the distribution scheme (20) based on a network configuration of the servers (3).

10. A computer readable, non-transitory medium storing a program for distributing a plurality of distribution files from a master server (2) possessing the plurality of distribution files to a plurality of servers (3),
when executed by the master server (2), the program making the master server (2):
generate a distribution scheme (20) having a tree structure, the tree structure comprising a plurality of nodes in a plurality of levels and having the master server (2) in a top node, wherein a distribution file group including at least one of the plurality of distribution files is to be allocated to each node, and a subordinate node is to include a subset of a distribution file group allocated to a superior node, which is located a level superior to the subordinate node;
allocate at least one of the servers (3) to each node in the distribution scheme (20), based on system status information indicating a status of at least one of the master server (2) or the plurality of servers (3); and
distribute at least one distribution file to each server (3), to be allocated to a node corresponding to the server (3), based on the distribution scheme (20),
when executed by the plurality of servers (3), the program making each server (3):
exchange distribution files not possessed by servers (3) corresponding to each node directly among the servers (3) corresponding to the each nodes, based on distribution file management information, the distribution file management information comprising, for each node in the distribution scheme (20), superior node information (31) indicating at least one node superior to the node, distribution file information (32) indicating a distribution file to be distributed, possessing distribution file information (33) indicating distribution files possessed by the node, subordinate node information (34) indicating at least one node subordinate to the node, subordinate possessing distribution file information (35) indicating a distribution file to be possessed by the at least one subordinate node.
A data distribution method of sharing a plurality of pieces of data among a plurality of communication apparatuses, the method comprising

11. A data distribution method (100) of sharing a plurality of pieces of data among a plurality of communication apparatuses (20), the method comprising:
sending, by a plurality of communication apparatuses (3) belonging to a same level in a tree-like distribution scheme (20), a part of pieces of data received from at least one subordinate communication apparatus (3), to at least one subordinate communication apparatus (3), to generate a plurality of groups of the plurality of communication apparatuses (3) which have different combination of not-yet-obtained pieces of data; and
replenishing, by each of the plurality of communication apparatuses (3), at least one not-yet-obtained piece of data, by receiving a first piece of data not possessed by the communication apparatus (3) from a second communication apparatus (3) belonging to a second group, simultaneously with sending a second piece of data not possessed by the second communication apparatus (3).

12. A data distribution system for sharing a plurality of pieces of data among a plurality of communication apparatuses (3), the data distribution system comprising:
a plurality of communication apparatuses (3) belonging to a same level in a tree-like distribution scheme (20), configured to send a part of pieces of data received from at least one subordinate communication apparatus (3), to at least one subordinate communication apparatus (3), to generate a plurality of groups of the plurality of communication apparatuses (3) which have different combination of not-yet-obtained pieces of data; and
a replenisher, in each of the plurality of communication apparatuses (3), configured to replenish at least one not-yet-obtained piece of data, by receiving a first piece of data not possessed by the communication apparatus (3) from a second communication apparatus (3) belonging to a second group, simultaneously with sending a second piece of data not possessed by the second communication apparatus (3).

13. A computer readable medium carrying computer readable instructions which, when executed on a suitable computer system, cause the computer system to perform the method of any one of claims 1 to 4 or claim 11.
